# FASCICULE DE BREVET EUROPEEN

(11) **EP 1 460 868 B1**
(45) Date de publication et mention de la délivrance du brevet: **26.10.2005**
(21) Numéro de dépôt: 04290638.8
(22) Date de dépôt: 01.03.2004
(51) Int. Cl.: H04Q 7/22

(54) **Timbre électronique pour message multimédia**
Elektronische Briefmarke für Multimedia-Nachrichten
Electronic stamp for multimedia messages

(30) Priorité: 18.03.2003 FR 0303270
(43) Date de publication de la demande: 22.09.2004
(73) Titulaire: ALCATEL, 75008 Paris (FR)
(72) Inventeur: Vincent, Paul, 31170 Tournefeuille (FR); Lebodic, Gwenael, 92800 Puteaux (FR)
(74) Mandataire: Chaffraix, Sylvain

(56) Documents cités:
- DE-A- 10 117 054

## Description

La présente invention concerne le domaine des messages multimédia reçus et/ou envoyés depuis et/ou vers des terminaux de radiocommunication, tels que des téléphones mobiles.

L'essor des messages multimédia, dits MMS (Multimédia Messaging Service), fait suite au grand succès des services de messages courts et avancés, dits SMS et EMS, dans le domaine de la radiocommunication. Les MMS constituent un développement de ce type de service de messagerie en offrant la possibilité d'inclure de plus en plus de données multimédia, tels que des images, des sons, des séquences vidéo et autres. L'échange de MMS peut être supporté par les réseaux radio dits de deuxième et troisième génération, tels que le GPRS (General Packet Radio Service) ou l'UMTS (Universal Mobile Telecommunication System) par exemple. Un example se trouve dans DE 101 17054. En outre, les services de messagerie MMS ont pris en compte les contraintes d'interopérabilité avec les services de messagerie électronique via l'Internet pour définir la structure et le mode d'échange des MMS. Un terminal de radiocommunication, conçu pour supporter un service de messagerie MMS et pour fonctionner sur un réseau de deuxième ou troisième génération, peut donc échanger des messages multimédia avec des terminaux reliés au réseau Internet ou à d'autre type de réseau filaire ou sans fil.

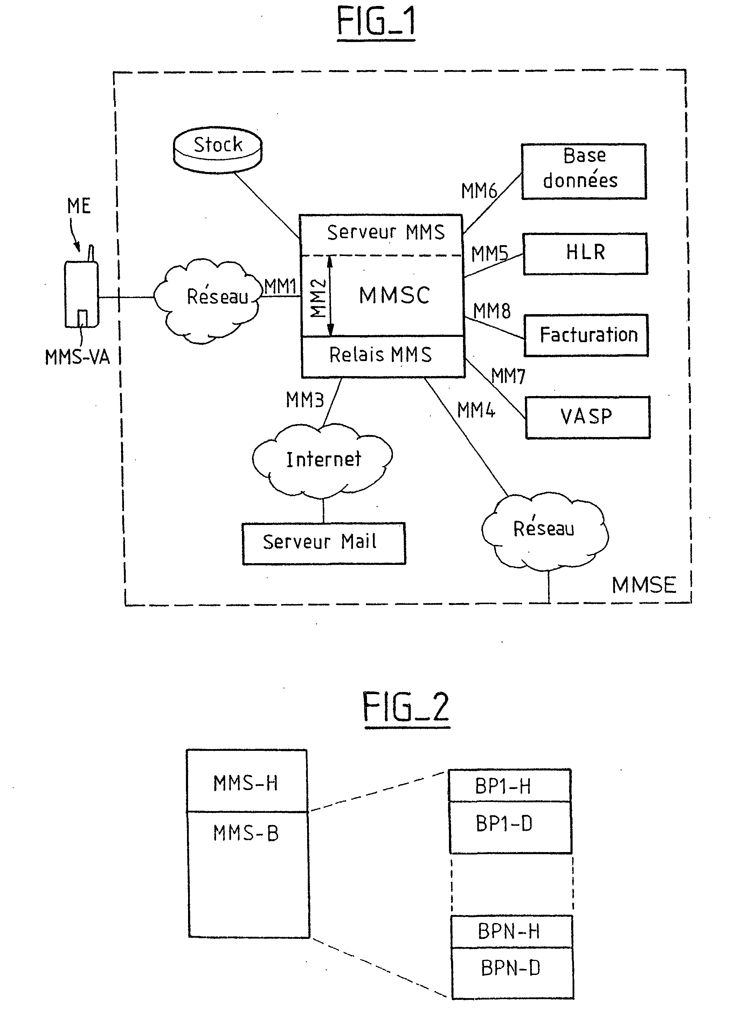

La figure 1 illustre schématiquement l'architecture réseau d'un service de messagerie multimédia.

Un tel système d'échange de MMS est organisé pour couvrir plusieurs éléments de réseau de manière à pouvoir assurer l'interopérabilité avec les systèmes de messagerie existants tels que les SMS et EMS ainsi que les systèmes de messagerie fixes tels que les services de messagerie électronique via Internet. L'architecture MMS requiert d'une part une infrastructure réseau apte à transporter, adapter et stocker les messages MMS, et d'autre part des éléments logiciels permettant la composition, l'envoi et la réception de messages MMS, tant au niveau du terminal mobile que du réseau.

Ainsi, un environnement MMS est défini dans un réseau de radiocommunication donné, désigné sous le terme de MMSE (MMS Environment), incluant un ensemble d'éléments réseau sous le contrôle d'un fournisseur de service de messagerie multimédia (connu comme MMS provider) donnant accès aux services MMS dans le cadre d'un abonnement utilisateur audit réseau.

La clé de voûte de l'architecture réseau MMS est le serveur relais, communément désigné par le sigle MMSC pour MMS Centre, représenté sur la figure 1. Un MMSC est associé à un environnement MMSE donné. Le relais du MMSC est en charge du transport des messages MMS dans ledit environnement et vers d'autres centres MMSC' attachés à d'autres environnements MMSE' ou vers d'autres serveurs de messagerie et le serveur du MMSC est en charge du stockage (Stock) des messages MMS dans l'attente de leur délivrance à un terminal attaché audit environnement MMSE. Par ailleurs, le MMSC est également en charge de l'adaptation de contenu des messages MMS, de la tenue de registres d'abonnés et de l'interface avec les systèmes de facturation et d'application de services proposés aux abonnés.

Un terminal de radiocommunication (ME) apte à échanger des MMS contient un logiciel, désigné comme MMS User Agent (MMS-UA) en terminologie anglaise, qui est embarqué dans le terminal. Ce logiciel (MMS-UA) permet la composition, la présentation, l'envoi et la réception des messages MMS. Chaque MMS-UA émetteur et récepteur d'un MMS est attaché à un environnement MMSE correspondant respectivement au domaine d'abonnement réseau du terminal émetteur et récepteur, ces environnements émetteur et récepteur pouvant éventuellement être les mêmes. Un MMS-UA communique avec le serveur MMSC de son environnement MMSE par une interface dédiée MM1 dudit serveur.

Les différents éléments de l'environnement MMSE communiquent entre eux par des interfaces normalisées. Chaque interface permet certaines opérations telles que la soumission, la récupération, le transfert d'un message MMS, et chaque opération est associée à une série de paramètres, connus sous le terme d'élément d'information, ou Information Element en anglais. Plusieurs de ces interfaces ont été standardisées dans les spécifications du WAP Forum (et sont désormais intégrées au sein de l'OMA -Open Mobile Alliance- ou du 3GPP) et d'autres constituent des solutions propriétaires dépendantes des implémentations retenues par les constructeurs des centres MMSC.

L'interface MM1 est dédiée à l'échange entre le MMSC et le logiciel MMS-UA embarqué dans le terminal (ME).

L'interface MM2 est destinée à relier le serveur au relais MMS dans le centre MMSC.

L'interface MM3 permet de relier le MMSC à des serveurs externes tels que des serveurs de messagerie électronique de type mail ou des centres de messagerie court SMS (Short Message Service).

L'interface MM4 est dédiée à l'échange entre deux centres MMSC. Cette interface est utilisée pour l'échange de MMS entre des environnements MMSE distincts.

L'interface MM5 permet au MMSC de requérir des informations de localisation contenues dans un registre (HLR pour Home Location Register en anglais). Cela permet par exemple au MMSC de transférer un message vers un autre domaine.

L'interface MM6 permet au MMSC d'interroger une base de données qui concerne les utilisateurs de l'environnement MMSE, par exemple pour recueillir une information de présence.

L'interface MM7 est dédiée à l'échange entre le MMSC et un fournisseur de service (connu comme VASP pour Value Added Service Provider en anglais). Cette interface permet à une application VAS de requérir un service auprès du MMSC, pour la délivrance d'un message par exemple, et de recevoir des messages de MMS-UA des terminaux mobiles.

L'interface MM8 est réservée aux échanges entre le MMSC et les systèmes de facturation.

Seules les interfaces MM1 à MM4 ont fait l'objet de standardisation au WAP Forum quant à leur implémentation technique. Les autres interfaces sont à ce jour des solutions propriétaires dont les spécifications restent à définir en vue d'une standardisation.

La figure 2 illustre schématiquement la structure d'un message MMS. Généralement, un message multimédia se présente sous la forme d'un message dit multiparties permettant d'inclure des éléments non textuels tels que des images, des sons ou des séquences vidéo à représenter simultanément lors de la lecture du message. Un tel MMS multiparties est alors mis en forme selon le format MIME (Multipurpose Internet Mail Extensions) étendu d'un encodage binaire pour le transfert du message sur le lien radio.

Classiquement, un MMS présente un en-tête (MMS-H) et un corps (MMS-B) pouvant contenir une pluralité de parties, connues comme Body Part (BP), correspondant chacune à un élément du message MMS tel qu'un son, une image... Le corps du message (MMS-B) se compose donc d'une succession de parties (BP) contenant chacune un en-tête (BP-H) indiquant le type d'élément et sa taille et des données (BP-D) représentant la définition dudit élément de message.

L'en-tête du message (MMS-H) contient des informations relatives au transport du message, telles que, entre autre, l'identification du destinataire, de l'émetteur, des destinataires en copie, une indication de délivrance du message ; et des informations relatives au message envoyé, telles que, entre autre, la date d'envoi, la date de validité du message, l'adresse à laquelle il faut répondre, l'identification du message auquel il est répondu, l'objet du message...

Les informations de l'en-tête sont organisées selon des champs auxquels sont attribuées des valeurs définies dans les spécifications du WAP Forum (WAP 209).

Classiquement, un message MMS est composé et envoyé depuis un terminal mobile (ME) au moyen d'un logiciel MMS-UA précédemment décrit. Cependant, un message MMS peut également être composé et envoyé depuis une station fixe tel qu'un ordinateur personnel, de type PC (Personal Computer). Un tel message est transmis par le PC à un serveur mail, via une connexion Internet ou à un serveur de fournisseur d'accès, via un site Internet, puis au MMSC par l'interface dédiée MM3 ou MM7.

A cet effet, le système de facturation de l'envoi d'un message MMS revêt une importance capitale pour assurer le développement de ce type de service.

Dans le cas bien connu des SMS, les fournisseurs de services permettent aux utilisateurs d'envoyer des messages de type SMS via une connexion au centre SMS d'un opérateur. L'opérateur est ainsi payé par le fournisseur de service, sur la base d'un abonnement utilisateur ou d'un nombre prédéfini de SMS.

Dans le cas des MMS, la situation est plus complexe. Si le message MMS est envoyé depuis un terminal de radiocommunication ME lié à un opérateur, le modèle de facturation des SMS peut s'appliquer. Mais, si le message MMS est envoyé depuis un poste fixe de type PC par exemple, via le réseau Internet, un autre modèle de facturation doit être défini.

Pour les besoins de facturation, le centre MMSC collecte des informations et génère un fichier de paiement dont il transmet les données au système de facturation via l'interface MM8. Le MMSC génère ces informations de facturation, de type « soumission », « délivrance », « transfert », « suppression » de message, en fonction des événements accomplis, mais n'émet aucune facture. C'est au fournisseur MMS de répercuter la facturation selon sa politique.

Ainsi, dans le cas de message MMS envoyé depuis un PC via Internet, il est nécessaire que l'émetteur ait un compte auprès d'un fournisseur de service (VAS) particulier, et cela uniquement pour des besoins de facturation. Cette contrainte qui pèse sur les internautes a tendance à freiner le développement des échanges MMS du réseau Internet vers le monde des terminaux mobiles.

La présente invention entend résoudre cet inconvénient en proposant un système de facturation simple et peu contraignant pour l'utilisateur, en particulier qui ne nécessite aucun abonnement à quelque service que ce soit.

Selon l'invention, il est propose d'attacher au message MMS un timbre électronique acquis auprès d'un fournisseur de timbre MMS. Cette acquisition peut être effectuée depuis un terminal connecté sur Internet, de manière analogue à un achat en ligne par exemple.

Le timbre électronique selon l'invention correspond à une clé numérique cryptée dont la validité peut être vérifiée par le centre MMSC avant délivrance du message MMS au terminal mobile destinataire.

Il est ainsi possible de facturer directement le coût du message MMS à l'expéditeur, sans émission de factures par des fournisseurs de service.

La présente invention se rapporte plus particulièrement à un service de messagerie multimédia dit MMS (Multimédia Messaging Service) consistant à transmettre un message dans un environnement de messagerie multimédia (MMSE) comprenant un centre de gestion (MMSC) des messages multimédia, caractérisé en ce que le message MMS transmis comporte un timbre électronique dont la validité est vérifiée par le centre de gestion (MMSC).

Un message MMS comprend un en-tête (MMS-H) contenant des paramètres relatifs au transport et contenu dudit message et un corps (MMS-B) contenant les éléments dudit message. Selon l'invention, un paramètre de l'en-tête est un champ correspondant au timbrage du message.

Selon les modes de réalisation, la valeur associée au champ de timbrage de l'en-tête est une valeur numérique cryptée ; ou une valeur binaire indiquant la présence du timbre électronique dans le corps du message.

La présente invention se rapporte également à un procédé d'envoi de messages multimédia, dits MMS (Multimédia Messaging Service) depuis un terminal émetteur, caractérisé en ce qu'il comporte les étapes suivantes :
- Requête d'un timbre électronique par le terminal émetteur auprès d'un fournisseur de timbres MMS ;
- Attribution de la valeur dudit timbre à un paramètre du MMS envoyé par le terminal;
- Réception dudit message MMS par un centre de centre de gestion (MMSC) des messages multimédia ;
- Vérification par ledit centre de gestion (MMSC) de la validité dudit timbre;
- Transmission dudit message MMS vers le terminal destinataire si la valeur dudit timbre est validée.

Selon une caractéristique, le procédé comprend en outre une étape d'invalidation du timbre électronique utilisé pour la transmission dudit message.

L'invention a également pour objet un système de messagerie multimédia dit MMS (Multimédia Messaging Service) apte à transmettre un message dans un environnement de messagerie multimédia (MMSE) comprenant un centre de gestion (MMSC) des messages multimédia, caractérisé en ce que le système comporte un fournisseur de timbre électronique, un timbre étant associé à un message MMS à transmettre par ledit système, le centre de gestion (MMSC) étant apte à vérifier la validité dudit timbre.

Selon une caractéristique, le fournisseur de timbre délivre une valeur numérique cryptée sur requête d'un terminal, le centre de gestion (MMSC) possédant une clé de décryptage correspondante.

Selon une caractéristique, le fournisseur de timbres comprend un registre comportant une liste des timbres déjà utilisés.

Les particularités et avantages de la présente invention apparaîtront plus clairement à la lecture de la description qui suit, donnée à titre d'exemple illustratif et non limitatif, et faite en référence aux figures annexées dans lesquelles :
- la figure 1, déjà décrite, illustre schématiquement une architecture réseau permettant l'échange de MMS.
- la figure 2, déjà décrite, illustre schématiquement la structure d'un message multimédia MMS.
- la figure 3 illustre schématiquement le système selon l'invention.

L'invention en objet propose un service de messagerie multimédia, dit MMS, qui puisse inclure un élément associé au paiement de l'envoie dudit message. L'objet de l'invention trouve une application toute particulière lors de l'envoi d'un MMS depuis un terminal fixe de type PC connecté au réseau Internet, mais peut également être mis en oeuvre lors de l'envoi d'un MMS depuis un terminal mobile connecté à un réseau de radiocommunication de type GPRS ou UMTS ou depuis tout autre terminal apte à composer et envoyer un message MMS.

Selon l'invention, le message MMS comporte un timbre électronique encapsulé dans ledit message. A cet effet, le message MMS contient dans l'en-tête un paramètre dont le champ correspond au timbrage dudit message. Le timbre est une valeur numérique cryptée selon un quelconque procédé de cryptage connu (DSA, pour Digital Signature Algorithm, RSA, pour Rivest, Shamir, Adleman du nom des inventeurs , El Gamal du nom de l'inventeur ou autre). Cette valeur numérique de timbrage est alors incorporée dans le message MMS.

Selon les modes de réalisation, l'en-tête du message (MMS-H) peut directement contenir la valeur numérique cryptée du timbre électronique dans ledit champ correspondant au timbrage, ou l'en-tête indique simplement par une valeur binaire la présence du timbre électronique dans le corps du message (MMS-B) et ladite valeur numérique du timbre est alors contenue dans une partie (BP) du corps du message (MMS-B).

Comme exposé en introduction, la transmission de messages MMS est supportée par un environnement MMSE dont la clé de voûte est le centre de gestion MMSC. Selon l'invention, le MMSC est apte à vérifier la validité d'un timbre électronique associé à un message MMS donné.

Cette opération est effectuée selon un quelconque procédé de décryptage connu. Par exemple, si le procédé de cryptage RSA est utilisé, le timbre T est chiffré selon la relation :
C= T^{e} mod n ; avec e clé publique et n= p.q, p et q étant de grands nombres premiers secrets.

Le MMSC déchiffrera le timbre comme suit :
T= C^{d} mod n ; avec d clé secrète liée à l'exposant e.

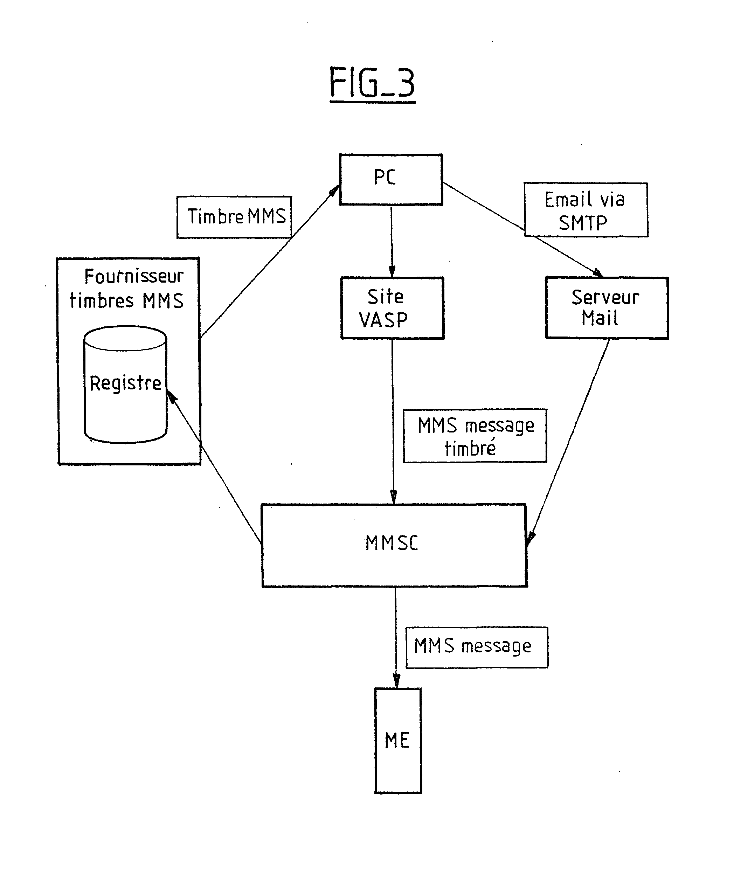

En référence à la figure 3, l'invention concerne un système de messagerie multimédia dit MMS comportant un fournisseur de timbre électronique. Ce fournisseur de timbre est avantageusement accessible par le réseau Internet, comme un site de service en ligne. C'est le fournisseur de timbre qui délivre, sur requête d'un terminal, un timbre électronique sous la forme d'une valeur numérique cryptée, le centre de gestion (MMSC) possédant une clé de décryptage correspondante.

La valeur numérique du timbre est préférentiellement un identifiant unique. Cet identifiant peut optionnellement inclure le montant du timbre qui peut dépendre entre autre de la taille du message, de son type (publicitaire, information, personnel) et du nombre de destinataires. Ces paramètres sont éventuellement à préciser lors de la requête du timbre auprès du fournisseur de timbre électronique.

Le fournisseur de timbre peut être totalement indépendant du MMSE. Ainsi, différents MMSC appartenant à différents MMSE peuvent disposer d'une clé de décryptage apte à vérifier la validité des timbres électroniques associés aux messages MMS transmis à un terminal lié à leur environnement respectif. La facturation des messages MMS émis depuis des terminaux non rattachés à un opérateur MMS d'un réseau de radiocommunication, ce qui est le cas par exemple des PC connectés à Internet, est ainsi effectuée simplement par l'achat, en ligne, d'un timbre électronique.

Ainsi, l'invention propose un procédé d'envoi d'un message MMS depuis un terminal émetteur, par exemple un PC relié à Internet. Selon ledit procédé, le terminal émetteur présente une requête au fournisseur de timbres et ce dernier lui délivre un timbre sous forme d'une valeur numérique cryptée. Cette requête est accompagnée du règlement dudit timbre, selon une procédure quelconque d'achat en ligne.

La valeur numérique dudit timbre est alors associée à un paramètre du message MMS comme précédemment exposé et le message MMS « timbré » est envoyé par le terminal émetteur, par exemple via un site Internet dédié ou directement sous forme de message électronique (mail). Le message MMS sera alors transmis, via un fournisseur dudit site (VASP, pour Value Added Service Provider) ou via un serveur de messagerie électronique sur Internet, au centre de gestion MMSC du terminal destinataire. Ledit centre MMSC détectera la présence d'un timbre électronique dans ledit message (un paramètre de l'en-tête étant dédié au timbrage comme précédemment exposé) et décryptera ledit timbre. Si le timbre est reconnu valide par le MMSC, ce dernier transmettra le message MMS au terminal destinataire.

Le procédé selon l'invention peut en outre comporter une étape d'invalidation du timbre utilisé. Cette étape d'invalidation peut être effectuée après usage du timbre, par le centre de gestion MMSC qui transmet la valeur du timbre utilisé au fournisseur de timbre, ou par le fournisseur lui-même à la délivrance dudit timbre.

Le fournisseur de timbres comprend ainsi un registre qui contient par exemple les nombres premiers et exposant nécessaires à la création des timbres électroniques cryptés et une liste des timbres déjà utilisés.

## Revendications

1. Service de messagerie multimédia dit MMS (Multimédia Messaging Service) consistant à transmettre un message dans un environnement de messagerie multimédia (MMSE) comprenant un centre de gestion (MMSC) des messages multimédia, **caractérisé en ce que** le message MMS transmis comporte un timbre électronique dont la validité est vérifiée par le centre de gestion (MMSC).

2. Service de messagerie multimédia selon la revendication 1, ledit message MMS comprenant un en-tête (MMS-H) contenant des paramètres relatifs au transport et contenu dudit message et un corps (MMS-B) contenant les éléments dudit message, **caractérisé en ce qu'**un paramètre de l'en-tête est un champ correspondant au timbrage du message.

3. Service de messagerie multimédia selon la revendication 2, **caractérisé en ce que** la valeur associée au champ de timbrage de l'en-tête est une valeur numérique cryptée.

4. Service de messagerie multimédia selon la revendication 2, **caractérisé en ce que** la valeur associée au champ de timbrage dans l'en-tête est une valeur binaire indiquant la présence du timbre électronique dans le corps du message (MMS-B).

5. Service de messagerie multimédia selon la revendication 4, **caractérisé en ce qu'**une partie (BP) du corps du message (MMS-B) contient le timbre électronique sous forme d'une valeur numérique cryptée.

6. Procédé d'envoi de messages multimédia, dits MMS (Multimédia Messaging Service) depuis un terminal émetteur, **caractérisé en ce qu'**il comporte les étapes suivantes :
- Requête d'un timbre électronique par le terminal émetteur auprès d'un fournisseur de timbres MMS ;
- Attribution de la valeur dudit timbre à un paramètre du MMS envoyé par le terminal ;
- Réception dudit message MMS par un centre de centre de gestion (MMSC) des messages multimédia ;
- Vérification par ledit centre de gestion (MMSC) de la validité dudit timbre ;
- Transmission dudit message MMS vers le terminal destinataire si la valeur dudit timbre est validée.

7. Procédé selon la revendication 6, **caractérisé en ce qu'**il comprend en outre une étape d'invalidation du timbre électronique utilisé pour la transmission dudit message.

8. Procédé selon la revendication 7, **caractérisé en ce que** l'étape d'invalidation du timbre électronique est effectuée par le centre de gestion (MMSC) qui transmet la valeur du timbre utilisé au fournisseur de timbre MMS.

9. Procédé selon la revendication 7, **caractérisé en ce que** l'étape d'invalidation du timbre électronique est effectuée par le fournisseur de timbre MMS lors de la délivrance dudit timbre.

10. Système de messagerie multimédia dit MMS (Multimédia Messaging Service) apte à transmettre un message dans un environnement de messagerie multimédia (MMSE) comprenant un centre de gestion (MMSC) des messages multimédia, **caractérisé en ce que** le système comporte un fournisseur de timbre électronique, un timbre étant associé à un message MMS à transmettre par ledit système, le centre de gestion (MMSC) étant apte à vérifier la validité dudit timbre.

11. Système de messagerie multimédia selon la revendication 10, **caractérisé en ce que** le fournisseur de timbre délivre une valeur numérique cryptée sur requête d'un terminal, le centre de gestion (MMSC) possédant une clé de décryptage correspondante.

12. Système de messagerie multimédia selon l'une des revendications 10 à 11, **caractérisé en ce que** le fournisseur de timbres comprend un registre comportant une liste des timbres déjà utilisés.

## Claims

1. A multimedia messaging service (MMS) consisting in transmitting a message in a multimedia messaging environment (MMSE) comprising a multimedia message management center (MMSC), **characterized in that** the transmitted MMS message includes an electronic stamp whose validity is verified by the management center (MMSC).

2. A multimedia messaging service according to claim 1, said MMS message comprising a header (MMS-H) containing parameters relating to the transport and content of said message and a body (MMS-B) containing the elements of said message, **characterized in that** one parameter of the header is a field corresponding to the stamping of the message.

3. A multimedia messaging service according to claim 2, **characterized in that** the value associated with the stamping field of the header is an encrypted numerical value.

4. A multimedia messaging service according to claim 2, **characterized in that** the value associated with the stamping field in the header is a binary value indicating the presence of the electronic stamp in the body (MMS-B) of the message.

5. A multimedia messaging service according to claim 4, **characterized in that** a portion (BP) of the message body (MMS-B) contains the electronic stamp in the form of an encrypted numerical value.

6. A method of sending multimedia message service (MMS) messages from a sender terminal, **characterized in that** it includes the following steps:
- the sender terminal requesting an electronic stamp from an MMS stamp provider,
- assigning the value of said stamp to a parameter of the MMS sent by the terminal,
- a multimedia message management center (MMSC) receiving said MMS message,
- said management center (MMSC) verifying the validity of said stamp, and
- transmitting said MMS message to the destination terminal if the value of said stamp is validated.

7. A method according to claim 6, **characterized in that** it further comprises a step of invalidating the electronic stamp used for the transmission of said message.

8. A method according to claim 7, **characterized in that** the step of invalidating the electronic stamp is effected by the management center (MMSC), which transmits the value of the stamp used to the MMS stamp provider.

9. A method according to claim 7, **characterized in that** the step of invalidating the electronic stamp is effected by the MMS stamp provider at the time of delivering said stamp.

10. A multimedia messaging service (MMS) system adapted to transmit a message in a multimedia messaging environment (MMSE) comprising a multimedia message management center (MMSC), **characterized in that** the system includes an electronic stamp provider, a stamp being associated with an MMS message to be transmitted by said system, the management center (MMSC) being adapted to verify the validity of said stamp.

11. A multimedia messaging system according to claim 10, **characterized in that** the stamp provider delivers an encrypted numerical value at the request of a terminal, the management center (MMSC) holding a corresponding decrypting key.

12. A multimedia messaging system according to either claim 10 or claim 11, **characterized in that** the stamp provider comprises a register containing a list of stamps already used.

## Patentansprüche

1. Ein als MMS (Multimedia Messaging Service) bezeichneter Multimedia-Mitteilungsdienst, der darin besteht, eine Mitteilung in einer Multimedia-Mailumgebung (MMSE) zu übertragen, die eine Vermittlungsstelle (MMSC) für Multimedia-Mitteilungen umfasst, **dadurch gekennzeichnet, dass** die übertragene MMS-Mitteilung einen elektronischen Stempel beinhaltet, dessen Gültigkeit von der Vermittlungsstelle (MMSC) überprüft wird.

2. Multimedia-Mitteilungsdienst gemäß Anspruch 1, wobei die genannte MMS-Mitteilung einen Header (MMS-H) umfasst, der die Parameter in Bezug auf die Übertragung und den Inhalt der genannten Mitteilung sowie einen Körper (MMS-B) umfasst, der die Elemente der genannten Mitteilung beinhaltet, **dadurch gekennzeichnet, dass** es sich bei einem Header-Parameter um ein Feld handelt, das der Stempelung der Mitteilung entspricht.

3. Multimedia-Mitteilungsdienst gemäß Anspruch 2, **dadurch gekennzeichnet, dass** es sich bei dem Wert, der dem Stempelungsfeld des Headers zugeordnet ist, um einen verschlüsselten Zahlenwert handelt.

4. Multimedia-Mitteilungsdienst gemäß Anspruch 2, **dadurch gekennzeichnet, dass** es sich bei dem Wert, der dem Stempelungsfeld des Headers zugeordnet ist, um einen binären Wert handelt, der das Vorhandensein des elektronischen Stempels im Mitteilungskörper (MMS-B) anzeigt.

5. Multimedial-Mitteilungsdienst gemäß Anspruch 4, **dadurch gekennzeichnet, dass** ein Teil (BP) des Mitteilungskörpers (MMS-B) den elektronischen Stempel in Form eines verschlüsselten Zahlenwertes beinhaltet.

6. Versandverfahren für Multimedia-Mitteilungen über ein Versandterminal, MMS (Multimedia Messaging Service) genannt, **dadurch gekennzeichnet, dass** es aus folgenden Schritten besteht:
- Anforderung eines elektronischen Stempels durch das Versandterminal bei einem Provider von MMS-Stempeln;
- Zuordnung des Wertes des genannten Stempels zu einem vom Terminal versandten MMS-Parameter;
- Empfang der genannten MMS-Meldung in einem Vermittlungszentrum für Multimedia-Mitteilungen (MMSC);
- Überprüfung der Gültigkeit des genannten Stempels durch die genannte Vermittlungsstelle (MMSC);
- Übermittlung der genannten MMS-Mitteilung an das Empfängerterminal, wenn der Wert des genannten Stempels freigegeben wurde.

7. Verfahren gemäß Anspruch 6, **dadurch gekennzeichnet, dass** es außerdem einen Schritt zur Entwertung des elektronischen Stempels umfasst, der zur Übertragung der genannten Mitteilung verwendet wurde.

8. Verfahren gemäß Anspruch 7, **dadurch gekennzeichnet, dass** der Schritt zur Entwertung des elektronischen Stempels von der Vermittlungsstelle (MMSC) durchgeführt wird, die den Wert des genutzten Stempels an den Provider des MMS-Stempels übermittelt.

9. Verfahren gemäß Anspruch 7, **dadurch gekennzeichnet, dass** der Schritt zur Entwertung des elektronischen Stempels vom MMS-Provider bei der Übermittlung des genannten Stempels durchgeführt wird.

10. Als MMS bezeichneter Multiniedia-Mitteilungsdienst (Multimedia Messaging Service), der in der Lage ist, eine Mitteilung in einer Multimedia-Mitteilungsumgebung (MMSE), bestehend aus einer Vermittlungsstelle (MMSC) für Multimedia-Mitteilungen, zu übertragen, **dadurch gekennzeichnet, dass** das System einen Provider eines elektronischen Stempels umfasst, wobei der Stempel der von dem genannten System zu übermittelnden MMS-Mitteilung zugeordnet ist und die Vermittlungsstelle (MMSC) in der Lage ist, die Gültigkeit des genannten Stempels zu überprüfen.

11. Multimedia-Mitteilungsdienst gemäß Anspruch 10, **dadurch gekennzeichnet, dass** der Provider des elektronischen Stempels auf Anfrage eines Terminals einen verschlüsselten Zahlenwert liefert, wobei die Vermittlungsstelle (MMSC) über einen entsprechenden Schlüssel zum Auslesen verfügt.

12. Multimedia-Mitteilungsdienst gemäß einem der Ansprüche 10 bis 11, **dadurch gekennzeichnet, dass** der Provider von Stempeln ein Register führt, das eine Liste der bereits verwendeten Stempel beinhaltet.
